# EUROPÄISCHE PATENTSCHRIFT

(11) **EP 0 407 469 B1**
(45) Veröffentlichungstag und Bekanntmachung des Hinweises auf die Patenterteilung: **07.04.1993**
(21) Anmeldenummer: 89906042.0
(22) Anmeldetag: 24.05.1989
(51) Int. Cl.: G01N 1/22, G01N 1/10

(54) **VERFAHREN UND VORRICHTUNG ZUR NICHT INTRUSIVEN KONTINUIERLICHEN UND AUTOMATISCHEN ANALYSENPROBENNAHME, ABSPEICHERUNG UND BEREITSTELLUNG DER PROBEN UND DATEN FÜR EINE EVENTUELLE AUSWERTUNG**
PROCESS AND DEVICE FOR NON-INTRUSIVELY, CONTINUOUSLY AND AUTOMATICALLY TAKING, STORING AND SUPPLYING ANALYSIS SAMPLES AND DATA FOR FUTURE EVALUATION
PROCEDE ET DISPOSITIF DE PRELEVEMENT AUTOMATIQUE ET NON-INTRUSIF EN CONTINU D'ECHANTILLONS D'ANALYSE, DE CONSERVATION ET DE MISE A DISPOSITION DES ECHANTILLONS ET DES DONNEES A DES FINS D'EVALUATION FUTURE

(30) Priorität: 28.05.1988 DE 3818210
(43) Veröffentlichungstag der Anmeldung: 16.01.1991
(73) Patentinhaber: Bruker-Franzen Analytik GmbH, D-28359 Bremen (DE)
(72) Erfinder: ODERNHEIMER, Bernhard, D-3042 Munster (DE)
(74) Vertreter: KOHLER SCHMID + PARTNER
(86) Internationale Anmeldenummer: DE8900330
(87) Internationale Veröffentlichungsnummer: WO8911641

(56) Entgegenhaltungen:
- EP-A- 0 055 624
- AU-A- 518 473
- DE-A- 1 900 808
- US-A- 4 541 268

## Beschreibung

Die Erfindung betrifft ein Verfahren und eine Vorrichtung zur nicht intrusiven kontinierlichen und automatischen Analysenprobennahme nach dem Oberbegriff des Anspruchs 1 und des Anspruchs 2. Zahlreiche Merkmale der Oberbegriffe dieser genannten Ansprüche sind aus der EP-A1-0 055 624 bekannt. Bei dem bekannten Verfahren bzw. der bekannten Vorrichtung wird Gas in einer Sorptionsschicht gespeichert. Die Druckschrift enthält keine Angaben darüber, daß die Sorptionsschicht zur Aufnahme des Gases erhitzt werden soll. Das gespeicherte Gas wird zur Analyse durch Erhitzung aus dem Sorptionsband ausgetrieben. Bei dem Band kann es sich um ein Band mit ferromagnetischen Bestandteilen handeln, so daß das bekannte Band magnetisch gespeicherte Informationen zusätzlich zu den gespeicherten Gasproben enthalten kann.

Die Druckschrift spricht lediglich von der Speicherung von Gasproben. Da davon auszugehen ist, daß die Speicherung der Gasproben bei einer ähnlichen Temperatur erfolgt, bei der der Speicherkörper später gelagert wird, ist damit zu rechnen, daß merkliche Mengen der gespeicherten Gase während einer längeren Lagerdauer aus dem Speicherkörper herausdiffundieren und daher für die spätere Auswertung verlorengehen. Das bekannte Verfahren und die bekannte Vorrichtung ist daher nicht in der Lage, die Proben langfristig für eine eventuelle Auswertung bereitzustellen.

Durch die AU-B1-30 907/77 ist ein Verfahren und eine Vorrichtung zur kontinuierlichen und automatischen Probennahme, Speicherung der Analysenproben und nachfolgenden Auswertung der Analysenproben bekannt, wobei vom Erdboden Festkörper-Proben durch eine Pumpe angesaugt werden, durch eine Düse auf ein mit einem Kleber beschichtetes Trägerband aufgebracht werden, so daß sich Probenflecke bilden, und zwecks Analyse die Bestandteile der Probe durch einen Hammer zerkleinert werden, anschließend durch ein Abdeckband abgedeckt werden und einer Analyse zugeführt werden. Bei den Möglichkeiten der Analyse ist erwähnt, daß die auf dem Band haftenden Partikel erhitzt werden können, um interessierende Elemente oder Verbindungen auszutreiben und diese dann zu analysieren. Bei dem zuletzt beschriebenen bekannten Verfahren und der bekannten Vorrichtung bestehen die Probenflecke auf dem Speicherband aus Feststoffen, die äußerlich an dem Band haften. Das bekannte Verfahren und die bekannte Vorrichtung ist nicht zur Speicherung von Gas oder Flüssigkeit geeignet.

Die Erfindung betrifft ganz allgemein das technische Gebiet der Probennahme und Probenspeicherung für die Analytik von Gasen und Flüssigkeiten sowie die Probeneingabe in ein Analysengerät. Anwendung kann die Erfindung u.a. darin finden, einen chemischen Prozeß in einer Chemieanlage, einen Chemie-Störfall oder ein sonstiges umweltbelastendes Ereignis "retrospektiv" zu untersuchen, z.B. die Zusammensetzung eines Reaktionsgemisches hinsichtlich der Hauptkomponenten in Abhängigkeit von der Zeit, die Belastung der Luft in der Umgebung eines Chemikalienlagers oder das Flußwasser an Abwasser-Einleitungsstellen. Neben der Prozeßkontrolle und Umweltüberwachung ist die Verifikation der Nichtherstellung von chemischen Waffen ein potentiell wichtiges Anwendungsgebiet. Bei Verdacht auf Verstoß gegen ein entsprechendes Ächtungsabkommen eröffnet die Erfindung eine einfache Möglichkeit der retrospektiven Analyse von Proben, die relevanten Daten wie Tag/Uhrzeit der Probenspeicherung, Temperaturprofilen, Drücken und Durchflußmengen exakt zugeordnet werden können. Eine wirksame kontinuierliche Probennahme und Probenspeicherung zum Zwecke der Oberwachung auf den vorgenannten Gebieten wird heute noch nicht praktiziert. In jüngster Zeit wurde durch spektakuläre Chemie-Unfälle der Mangel an einem einfachen, zuverlässigen Probennahme und -speichersystem deutlich.

Zwar werden heute viele Geräte und Apparate, die früher mehr zur Oberwachung chemotechnischer Prozesse eingesetzt wurden, zur Kontrolle der Umwelt, der Lebensmittelreinhaltung und zur Überwachung von Schadstoff-Konzentrationen verwendet. Diese Analysengeräte arbeiten auch manchmal kontinuierlich, verwerten dann aber die Analysen sofort in einem on-line-Betrieb, d.h. sie speichern keine Analysenproben und korrelierenden Daten ab. In Ausnahmefällen werden flüssige oder gasförmige Proben als solche oder in angereicherter Form auf Sorbentien, wie Tenax oder XAD, gebracht und bis zur Analyse aufbewahrt. Hierzu befinden sich Probensammler und Autoinjektoren für die Gaschromatographie auf dem Markt, letztere zur automatisierten Eingabe der sorbierten chemischen Komponenten in ein Analysengerät, z.B. in eine Gaschromatograph-Massenspektrometer-Kopplung.

Ein mehrfacher passiver Probensammler mit der Möglichkeit der schnellen Eingabe der Probe in den Eingangskopf eines Analysengerätes wurde als vorteilhafte Alternative zu Tenax- und XAD-Sorptionsröhrchen beschrieben (DE-OS 3 137 765 und U.S. Patent 4,541,268). Hier wird die Fähigkeit einer sorptiven Sammelscheibe zur Probenanreicherung, Probenspeicherung und -desorption nach Transfer an den beheizten Eingangskopf eines Massenspektrometers oder anderen Analysengerätes genutzt. Als Sorbens kann z.B. eine Siliconmembran verwendet werden.

Des weiteren ist ein als "SILAB" bezeichnetes Automatisierungssystem für klinisch-chemische Laboratorien in der Siemens-Zeitschrift, Heft 5 vom Mai 1973 veröffentlicht worden. Das Anwendungsgebiet von SILAB betrifft die biologisch-chemische Analysierung und Ergebnisauswertung dort, wo sogenannte Laborautomaten zum Einsatz kommen.

Analysenprobennahme und Auswertung stehen dabei in einem zeitlich eng verbundenen Zusammenhang. Jede Analyse wird ausgewertet und es ist geradezu die hierfür vorgegebene Aufgabenstellung, durch Mechanisierung und Rationalisierung, einschließlich des Einsatzes von Datenverarbeitung (auf dem Stand der Technik von 1973) die medizinische Diagnostik zu beschleunigen und bei der steigenden Anzahl von benötigten Untersuchungen diese Anforderungen zu bewältigen. Die zu untersuchenden biologischen Substanzen sind in aller Regel verderblich, d.h. chemisch-biologisch veränderlich und müssen daher in kurzen Zeitintervallen der Untersuchung zugeführt werden. jede Probe ist nur beschränkt haltbar, benötigt aber durch die geeigneten Untersuchungsgefäße (z.B. für Vollblut und Serum) einen relativ groben Raum- und Platzbedarf.

Das Automatisierungssystem SILAB kann nur nach einem vorher festgelegten und diskontinuierlichen Arbeitsablauf für gezielte Proben, in engem Zeitverbund bei vorgegebener Geräteausstattung sowie nach vorgegebenen Auswertungskriterien arbeiten. Die Vorteile liegen hier lediglich in der Rationalisierung und somit in der Leistungssteigerung der geforderten chemisch-klinischen Laborarbeiten.

Es ist heute noch kein einfaches automatisches Probennahmeverfahren bekannt, welches geeignet wäre, bei Bedarf eine (mehrere) chemische Komponente(n) in einem Gas- oder Flüssigkeitsgemisch nachträglich nachzuweisen, und zwar unter exakter Zuordnung relevanter Daten der Probennahme, wie Uhrzeit, Temperaturen, etc.

Der Erfindung liegt die Aufgabe zugrunde, ein Verfahren und eine Vorrichtung der gennanten Art so auszugestalten, daß eine langfristige Bereitstellung der gespeicherten Proben möglich ist. Diese Aufgabe wird durch die in den Patentansprüchen 1 und 2 beschriebene Merkmale gelöst.

Gemäß Unteranspruch 7 kann dabei die Probenspeicherrate durch die Wandstärke und die Temperatur eines als Restriktion fungierenden Silicongummis kontrolliert und stoffabhängig optimiert werden.

Anspruch 5 zeigt die Bestandteile der Einrichtung zur stofflichen Auswertung der Analysenproben, bestehend aus einem Probenentnahmekopf, welcher wiederum aus einem Heizblock, einer Kontaktmembran oder einem Kontaktgewebe und einem nachgeordneten Analysengerät besteht.

Nach Anspruch 6 schließlich besteht die Restriktion aus Silicongummi.

Das Lösungsprinzip der Erfindung beruht unter anderem darauf, daß auf einem gemeinsamen Speicherkörper, der aus mehreren Schichten bestehen kann, sowohl die Analysenproben stofflich abgespeichert, wie auch die dazugehörigen Daten, z.B. magnetisch oder optisch festgehalten werden. Weiterhin gehören zu der Erfindung die Einrichtung zum Speichern der Proben und Aufzeichnen der Begleitdaten und die Einrichtung zur Auswertung der gespeicherten Proben und aufgezeichneten Daten.

Durch die vorliegende Erfindung wird die zuverlässige Speicherung von Proben in der zweckmäßigen Menge (je nach Dimensionierung und Kapazität des Probenspeicherbandes) und die automatische Zuordnung relevanter Daten (z.B. Tag/Uhrzeit der Probenspeicherung) und bei Bedarf die rasche Zuführung der Proben auf einfache Weise ermöglicht. Die Vorrichtung kann ähnlich einer Magnetbandkassette platzsparend und durch vollständige Kapselung schwer manipulierbar konstruiert werden. Die Kopplung von Datenträger und Probenträger gewährleistet ein rasches Aufsuchen einer bestimmten Probe und erübrigt jede Buchführung über probenbezogene Daten.

Die vorliegende Erfindung bietet die Möglichkeit der nicht intrusiven, d.h. der unaufdringlichen, nicht störend beeinflussenden, aber kontinuierlichen Probennahme mit jeweiliger Speicherung der Identifizierungsdaten. Eine spätere, zeit- und ortsunabhängige Auswertung der gespeicherten Proben und Daten wird durch den mobilen Einsatz und die Lagerung der Speicherkassetten ermöglicht. Eine große Zahl von Proben kann langfristig und geschützt gegen chemische Einwirkungen und gegen unberechtigte Auswertung (Datenschutz) aufbewahrt werden. Ein solches Verfahren und eine hierfür speziell geeignete Vorrichtung ermöglicht eine Überwachung von chemischer Fabrikation sowohl bei größeren, als auch bei kleineren Unternehmen.

Im Gegensatz zu dem bereits erwähnten Automatisierungssystem "SILAB" liegt der Anwendungsbereich der Erfindung auf dem allgemeinen Gebiet der (nicht biologischen) Chemie und dort vor allem in der Erzeugung von chemischen Substanzen und Produkten, insbesondere von chemischen Kampfstoffen. Weiterhin sollen auf geringem Raum eine Vielzahl von Proben, insbesondere diffusions-fähiger Substanzen (Flüssigkeiten und Gasz) langfristig gespeichert und dafür gegen äußere Einwirkungen, d.h. gegen chemische Veränderungen, geschützt werden. Dizsz Analysenproben bewegen sich in der Regel im Spurenbereich, d.h. im Mikroprobenbereich. Das hierfür gefundene - nicht intrusive - Verfahren soll störende und behindernde Eingriffe in die Erzeugung von chemischen Produkten vermeiden, aber dennoch kontinuierlich, nach vorgegebenen Zeitintervallen, Proben entnehmen und diese sowohl körperlich speichern, als auch datenmäßig identifizieren können.

In einer speziellen Einrichtung zur kontinuierlichen Probennahme und zur Speicherung von Analysenproben und deren korrelierenden Daten gemäß den Ansprüchen 2 bis 6, bestehend im wesentlichen aus einem Speicherkörper in einer Speicherkassette, kann eine Vielzahl von Proben und Informationen auf relativ begrenztem Raum untergebracht werden.

Mit dem erfindungsgemäßen Verfahren und der hierfür entwickelten spezifischen Vorrichtung kann nach vorgegebenen Zeitintervallen für eine kontinuierliche Probennahme, eine eventuell später notwendig gewordene, vom Zeitpunkt und von einer Geräteausstattung unabhängige Analyse nach jederzeit festlegbaren Kriterien durchgeführt werden. Dieses System ermöglicht, aber bedingt nicht zwingend eine Auswertung der Analysenproben.

Eine nachträgliche exakte Inspektion eines Vorganges oder Ereignisses, bei der der Nachweis einer Chemikalie oder eines Schadstoffes eine Rolle spielt, d. h. der spätere jederzeitige Nachweis einer illegalen oder unbeabsichtigten Erzeugung gefährlicher und/oder verbotener Substanzen kann durch die Erfindung realisiert werden.

So erlaubt die Erfindung eine beweiskräftige Dokumentation über den Ablauf von chemischen Prozessen bzw. die Anwesenheit bestimmter chemischer Substanzen zu bestimmten Zeiten innerhalb eines Produktionsprozesses, aber auch in Abluft und Abwasser entsprechender Betriebe, in Abwasser von Mülldeponien etc. Diese Erfindung ist insbesondere in der Lagz, die Herstellung von chemischen Kampfstoffen im Rahmen von rationalen und internationalen Abkommen kontrollieren oder zumindest nachweisen zu können.

Die Erfindung könnte z. B. für die Vor-Ort-Inspektion im Rahmen der Verifikation eines C-Waffen-Verbotsabkommens von Bedeutung sein. Diskussionen über die Möglichkeiten der Verifikation der Nichtherstellung chemischer Waffen machten deutlich, daß auf diesem Gebiet ein besonderer Mangel besteht. Als problematisch gilt vor allem die Überwachung vor Ort in Industrieanlagen, wobei industrielle Geheimnisse geschützt bleiben müssen, jedoch die für die Oberwachung benötigten Daten dennoch in ausreichender Menge und Qualität verfügbar gemacht werden. Ferner kann die Erfindung eingesetzt werden bei der kontrollierten Vernichtung vorhandener C-Waffen-Bestände, bei der kontrollierten Herstellung von chemischen Kampfstoffen in erlaubter geringer Menge zu Forschungszwecken, oder auch bei der Verifikation des völkerrechtswidrigen Kampfstoffeinsatzes in militärischen Konflikten.

Die Erfindung wird nachstehend anhand der in den Zeichnungen dargestellten Ausführungsbeispiele näher erläutert. Es zeigen:

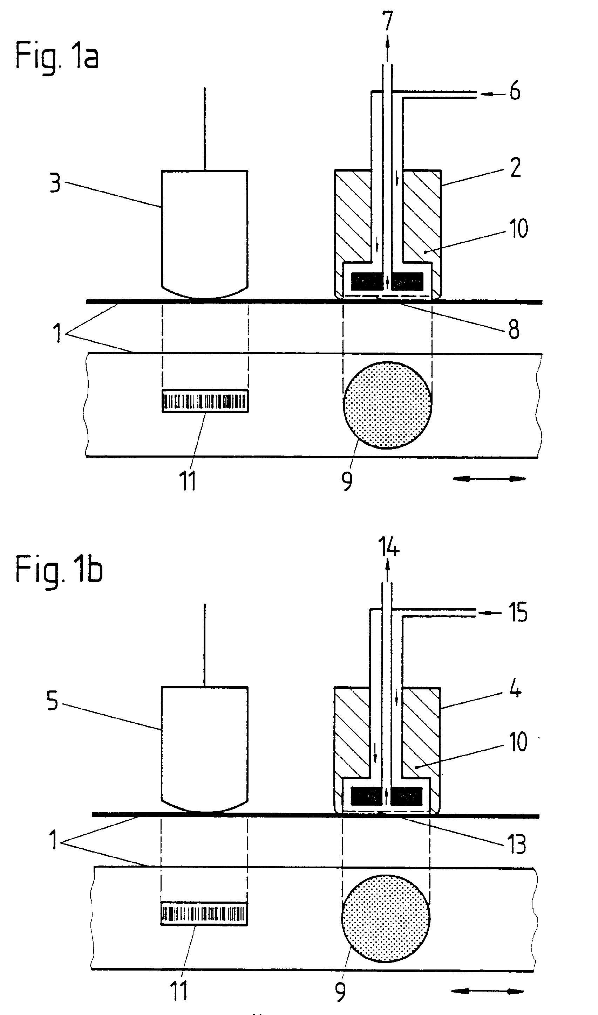

- Fig. 1 a: einen Querschnitt durch die Einrichtung zur Probennahme, Probenspeicherung und Datenaufzeichnung und eine Aufsicht auf den Speicherkörper
- Fig. 1 b: einen Querschnitt durch die Einrichtung zur stofflichen und datenmäßigen Auswertung der Analysenproben und eine Aufsicht auf den Speicherkörper
- Fig. 2 a bis Fig. 2 d: verschiedene Versionen der Anordnung von Probenspeicherungen und Datenaufzeichnungen auf dem Speicherkörper
- Fig. 3: einen Querschnitt durch eine geschlossene Speicherkassette mit einer Einrichtung zur Probennahme, Probenspeicherung; Datenaufzeichnung und einem auf Spulen wickelbaren Band als Speicherkörper
- Fig. 4: den beispielhaften 3-Schichtenaufbau des Speicherkörpers im Schnitt

Das erfindungsgemäße Speichern von Proben und korrelierenden Daten ist in Fig. 1 a dargestellt. Ein Speicherkörper 1, hier als Speicherband dargestellt, für Proben und Daten befindet sich während des Speichervorganges in Kontakt mit dem Probenspeicherkopf 2 und dem Datenschreibkopf 3.

Fig. 1 b zeigt den Abruf der Proben und Daten, wobei sich das Speicherband 1 in Kontakt mit dem Probennahmekopf 4 eines Analysengerätes 14 und dem Datenlesekopf 5 befindet.

Die Probenspeicherung erfolgt in der Weise, daß ein Probenstrom 6 als Flüssigkeit oder Gas Mittels einer nicht dargestellten Pumpe 7 über eine geeignete Restriktion 8 bei geeigneter Wandstärke und Temperatur mit der sorptionsfähigen Beschichtung 12 des Speicherbandes 1 in Berührung gebracht wird. Dabei gelangen die Komponenten aus dem Probenstrom 6 per Lösung und Diffusion in die Sorptionsschicht 12 und bilden an der Stelle, die dem Probenstrom 6 ausgesetzt war, einen Probenfleck 9 oder eine Probenspur 9. Die darin vorhandene Substanzmenge kann u.a. durch die Art der Restriktion 8, die Temperatur des Heizblockes 10, die Sorptionskapazität des Speicherbandes, die Zeitdauer der Einwirkung des Probenstroms 6 und die dem Probenstrom ausgesetzte Fläche des Speicherbandes variiert werden. Eine Siliconmembran bestimmter Dicke (meist unter 200 µm), die über das unterschiedliche Löslichkeits- und Diffusionsverhalten insbesondere organischer Schadstoffe zu selektiver Permeation befähigt ist, stellt eine besonders vorteilhafte Restriktion dar. Ihre Schichtdicke/Wandstärke hat ebenfalls Einfluß auf die Probenspeicherrate bzw. die gespeicherte Substanzmenge. Eine sehr wirksame Restriktion ist u.a. dann erforderlich, wenn dem Probenstrom 6 mit einer Durchflußrate von beispielsweise einigen g/min, entnommen aus einem chemischen Reaktionsgemisch, repräsentative Proben in Raten von nur einigen hundert ng/h gespeichert werden sollen.

Die Restriktion kann hingegen gänzlich entfallen, wenn der Probenstrom 6 z.B. aus Wasser besteht, etwa wenn Trinkwasser, Abwasser oder Flußwasser auf Spuren gelöster organischer Schadstoffe überwacht werden soll. In diesem Fall wird die Sorptionsschicht 12 des Speicherbandes dem wäßrigen Probenstrom direkt ausgesetzt.

Die Datenspeicherung erfolgt bei der dargestellten Ausführungsform in der von Magnetbandspeichergeräten her bekannten Weise und liefert eine Datenspur 11 in einer magnetisierbaren Schicht 20 des Speicherbandes 1. Bei anderen Ausführungsformen kann die Datenspeicherung auch optisch auf einer entsprechenden Schicht z.B. durch Drucker, Schreiber oder mit Hilfe eines Laserstrahles erfolgen.

Die Auswertung des Speicherbandes 1, d.h. der Abruf der Proben und Daten, erfolgt erfindungsgemäß in Umkehrung des Speichervorganges dadurch, daß die probenspeichernde Sorptionsschicht 12 in Kontakt mit der Kontaktmembran 13 oder dem Kontaktgewebe 13 des beheizten Probennahmekopfes 4 eines Analysengerätes 14 gebracht wird, und zwar mit dem Teilstück des Speicherbandes 1, das die Probe trägt, die bestimmten ebenfalls gespeicherten Daten (Uhrzeit/Tag, Temperatur) zugeordnet ist. Bei diesem Kontakt wird die Probe thermisch aus dem Speicherband 1 desorbiert und mittels des Trägergasstromes 15 gasförmig dem nicht dargestellten Analysengerät 14, vorzugsweise einem Gaschromatographen (GC), einem Massenspektrometer (MS) oder einer mobilen GC/MS-Kombination, ähnlich dem Spürsystem MM 1 (Firma Bruker-Franzen Analytik), zur Identifikation und Quantifikation zugeführt.

Die den Proben zugeordneten Daten werden in üblicher Weise mit einem Datenlesekopf 5 von der Datenspur 11 gelesen und ausgegeben.

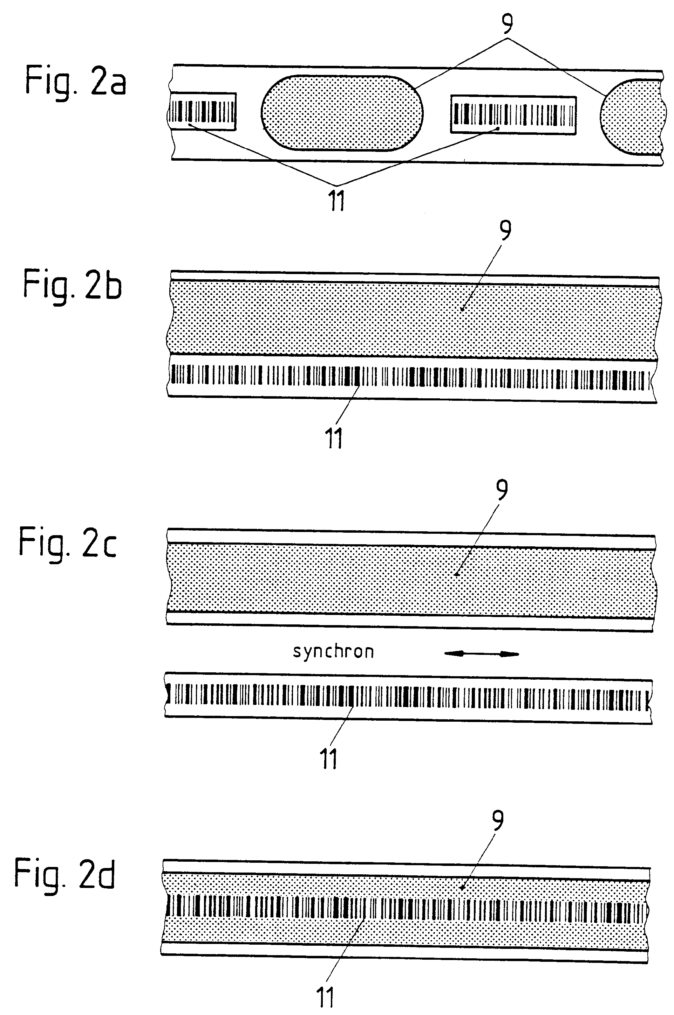

Wie in Fig. 2 a - d veranschaulicht, kann die Probenspeicherung kontinuierlich (oder auch diskontinuierlich) erfolgen und auf verschiedene Weise mit der Datenspeicherung korreliert werden.

Fig. 2 a zeigt die schematische Anordnung von Probenfleck 9 und Datenspur 11 in abwechselnd belegten Segmenten auf demselben Speicherband 1, wobei der Speichervorgang nur schubweise in Intervallen, also diskontinuierlich, erfolgt. Fig. 2 b zeigt ein Speicherband mit Probenspur 9 und Datenspur 11 in einer Anordnung nebeneinander.

Fig. 2 c zeigt getrennte Speicherbänder für die Probenspeicherung und die Datenspeicherung, was die räumliche Trennung des Probenspeicherkopfes 2 und des Datenschreibkopfes 3 während des Speichervorganges und die Verwendung bekannter Geräte, wie z.B. Magnetspeichergeräte, Strichcode-Drucker etc., ermöglicht. Die Synchronisation der Bandtransportmechaniken der Proben- und Datenspeicherung ist durch elektrische Steuerung gewährleistet.

Fig. 2 d zeigt ein Speicherband, auf dem Proben und Daten auf demselben Band kontinuierlich übereinander gespreichert sind. Bei dieser Ausführungsform eignet sich besonders die Verwendung der in Fig. 4 dargestellten magnetisierbaren Schicht 20.

Grundsätzlich kann auch eine Speicherplatte zur Speicherung von Proben und zugehörigen Daten verwendet werden. Technisch einfacher realisierbar und von der Kapazität her überlegen ist jedoch ein Speicherband.

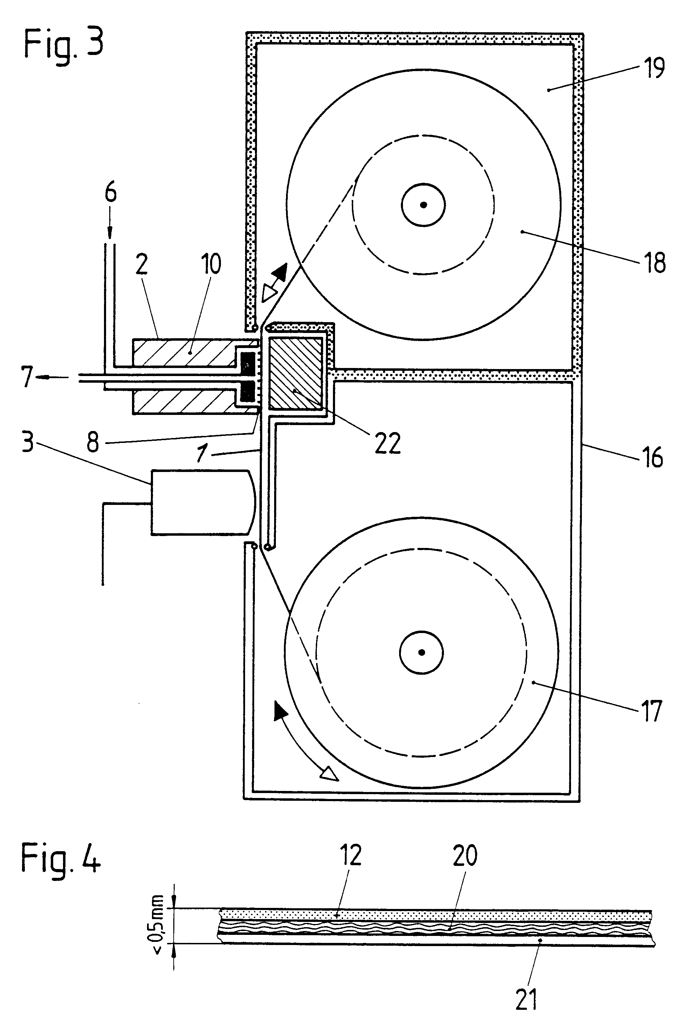

Fig. 3 zeigt schematisch den Speichervorgang, unter Zuhilfenahme einer geschlossenen Speicherkassette 16, angekoppelt an den Probenspeicherkopf 2 und den Datenschreibkopf 1, für die eine der Speicherarten gemäß Fig. 2 a, 2 b oder 2 d gewählt wird.

Eine nicht dargestellte Antriebsmechanik bewegt das Speicherband 1, das von der Vorratsspule 17 abgewickelt wird, in kontrollierter Weise am Datenschreibkopf 3 und Probenschreibkopf 2 mit Thermostatblock 22 vorbei zur Speicherspule 18, auf der das Speicherband 1 aufgewickelt wird. Die Speicherspule 18 befindet sich in der Kammer 19, die zweckmäßig auf tiefer Temeperatur gehalten wird, um Verdampfungs- und Zersetzungsverluste bei den Proben während eines Langzeit-Speicherbetriebes gering zu halten.

Fig. 4 zeigt den geschnittenen Speicherkörper 1, hier als Speicherband 1 dargestellt. Das Speicherband 1 besteht hier aus 3 Schichten: der Sorptionsschicht 12 für die Probenspeicherung, der magnetisierbaren Schicht 20 für die Datenspeicherung, sowie einer Metallbeschichtung 21, zweckmäßig Aluminiumfolie. Letztere verhindert als Diffusionssperre die unerwünschte Verschleppung gespeicherter Proben in benachbarte Windungen auf der Speicherspule 18.

Statt der wiederverwendbaren magnetisierbaren Schicht 20 kann für die Abspeicherung der korrelierenden Daten bei Ausführungsformen der Erfindung auch eine nicht dargestellte flexible Kunststoffschicht eingesetzt werden, welche mit Farbstoffen und/oder Polymeren beschichtet ist und wo optisch mit Hilfe eines Laserstrahles die Daten auf das Band geschrieben werden. Bei anderen Ausführungsformen kann zum Schreiben der Daten auch ein Drucker, Schreiber etc. verwendet werden. Besonders geeignet ist dabei die Verwendung eines Strichcode-Musters. Da eine solche Kunststoffschicht (Folie) nur einmal beschrieben werden kann, ist die Sicherheit der Daten gegen eine unerwünschte Vernichtung oder Verfälschung noch größer. Um die Daten auf der Datenspur 11 auch bei Verwendung einer magnetisierbaren Schicht 20 angemessen zu schützen, ist bei Ausführungsformen der Erfindung der Mantel der Speicherbandkassette 16 als magnetische Abschirmung ausgebildet. Als Mantelmaterial kann z.B. ein- oder mehrlagiges Weicheisen und µ-Metall etc. verwendet werden.

## Patentansprüche

1. Verfahren zur nicht intrusiven kontinuierlichen und automatischen Analysenprobennahme mit stofflicher und datenmäßiger Abspeicherung der Analysenproben, bei welchem Verfahren mit Hilfe einer Pumpe (7) ein Probenstrom (6) erzeugt wird, mit diesem Probenstrom (6) eine Probe entnommen und mittels eines Probenspeicherkopfes (2) auf einen sorptionsfähigen Speicherkörper (1) gebracht wird, die Probe durch Lösung und Diffusion in die Sorptionsschicht (12) des Speicherkörpers (1) eindringt und dort einen Probenfleck (9) oder eine Probenspur (9) bildet, parallel zur Probenspeicherung auf dem Speicherkörper (1) in einer Datenspur (11) mittels eines Datenschreibkopfes (3) die korrelierenden Daten aufgezeichnet werden, zur Auswertung der Probe der Speicherkörper (1) mittels einer Kontaktmembran (13) oder eines Kontaktgewebes (13) in Kontakt zu einem Probenentnahmekopf (4) gebracht wird, die Probe teilweise oder vollständig durch Temperatureinwirkung aus dem Probenfleck (9) der Sorptionsschicht (12) des Speicherkörpers (1) herausgelöst wird, die Probe mittels eines Trägergasstromes (15) der Analysierung (14) zugeführt wird, die korrelierenden Daten mittels eines Datenlesekopfes (5) aus der Datenspur (11) ausgelesen werden, wobei zur langfristigen Bereitstellung der Proben und Daten für eine eventuelle Auswertung nach später festlegbaren Kriterien die Sorptionsschicht (12) durch den Probenspeicherkopf (2) auf eine für die Speicherung geeignete Temperatur erwärmt wird.

2. Vorrichtung zur Durchführung des Verfahrens nach Anspruch 1, mit
- einer Einrichtung zur kontinuierlichen und automatischen Probennahme und Speicherung von Analysenproben und Aufzeichnung der korrelierenden Daten, bestehend aus einem sorptionsfähigen und entweder magnetisierbaren oder optisch beschriftbaren Speicherkörper (1), einem Probenspeicherkopf (2) und einem Datenschreibkopf (3); und
- einer Einrichtung zur stofflichen und datenmäßigen Auswertung der Analysenproben, bestehend aus einem Speicherkörper (1) mit den Proben und Daten, einem Probenentnahmekopf (4) und einem Datenlesekopf (5),
wobei der Probenspeicherkopf (2) einen Heizblock (10) aufweist.

3. Vorrichtung nach Anspruch 2, dadurch gekennzeichnet, daß der Probenspeicherkopf (2) einen Thermostatblock (22) aufweist.

4. Vorrichtung nach den Ansprüchen 2 und 3, dadurch gekennzeichnet, daß der für die Einrichtung zur kontinuierlichen und automatischen Probennahme und Speicherung von Analysenproben verwendete Probenspeicherkopf (2) eine Restriktion (8) aufweist, und daß die genannte Einrichtung eine Pumpe (7) aufweist.

5. Vorrichtung nach den Ansprüchen 2 bis 4, dadurch gekennzeichnet, daß der für die Einrichtung zur stofflichen Auswertung der Analysenproben verwendete Probenentnahmekopf (4) aus einem Heizblock (10), einer Kontaktmembran (13) oder einem Kontaktgewebe (13) und einem nachgeordneten Analysengerät (14) besteht.

6. Vorrichtung nach Anspruch 4, dadurch gekennzeichnet, daß die Restriktion (8) aus Silicongummi besteht.

7. Verfahren nach Anspruch 1, dadurch gekennzeichnet, daß die Probenspeicherrate durch die Wandstärke und Temperatur eines als Restriktion fungierenden Silicongummis kontrolliert und stoffabhängig optimiert wird.

8. Vorrichtung nach den Ansprüchen 2 bis 6 oder zur Durchführung eines Verfahrens nach Anspruch 1 oder 7, dadurch gekennzeichnet, daß die Datenspur (11) Teil einer magnetisierbaren Schicht (20) ist.

9. Vorrichtung nach den Ansprüchen 2 bis 6 oder zur Durchführung eines Verfahrens nach Anspruch 1 oder 7, dadurch gekennzeichnet, daß die Datenspur (11) Teil einer optisch beschriftbaren Schicht ist, die insbesondere eine flexible Kunststoff-Folie sein kann,-welche mit Farbstoffen und/oder Polymeren beschichtet ist.

10. Verfahren zum Betrieb einer Vorrichtung nach Anspruch 9, dadurch gekennzeichnet, daß die Datenspur (11) mittels eines Druckers, Schreibers oder Laserstrahls beschriftet wird.

11. Vorrichtung nach Anspruch 8, dadurch gekennzeichnet, daß die magnetisierbare Schicht (20) von einer Speicherbandkassette (16) ganz oder teilweise umgeben ist, deren Mantelmaterial so ausgebildet ist, daß es als magnetische Abschirmung wirkt.

12. Vorrichtung nach Anspruch 11, dadurch gekennzeichnet, daß das Mantelmaterial der Speicherbandkassette (16) ein- oder mehrlagig ist und Weicheisen und/oder µ-Metall enthält.

## Claims

1. Process for the nonintrusive continuous and automatic taking of analytical samples with storage of the analytical samples themselves and their data, in which process a sample stream (6) is produced with the aid of a pump (7), a sample is taken with this sample stream (6) and is brought to a sorptive storage element (1) by means of a sample storage head (2), the sample penetrates into the sorption layer (12) of the storage element (1) by dissolution and diffusion and forms a sample spot (9) or a sample trace (9) there, the correlating data are recorded parallel to the sample storage on the storage element (1) in a data trace (11) by means of a data recording head (3), the storage element (1) is brought into contact with a sampling head (4) by means of a contact membrane (13) or a contact fabric (13) in order to evaluate the sample, the sample is partially or completely dissolved out of the sample spot (9) of the sorption layer (12) of the storage element (1) by the action of heat, the sample is fed to the analysis (14) by means of a carrier gas stream (15) and the correlating data are read from the data trace (11) by means of a data read head (5), the sorption layer (12) being heated by the sample storage head (2) to a temperature suitable for the storage, for the long-term provision of the samples and data for possible evaluation according to criteria which can be determined subsequently.

2. Apparatus for carrying out the process according to Claim 1, having
- a means for continuous and automatic sampling and storage of analytical samples and recording of the correlating data, consisting of a sorptive and either magnetisable or optically inscribable storage element (1), a sample storage head (2) and a data recording head (3)
and
- a means for the evaluation of the analytical samples themselves and their data, consisting of a storage element (1) with the samples and data, a sampling head (4) and a data read head (5), the sample storage head (2) having a heating block (10).

3. Apparatus according to Claim 2, characterised in that the sample storage head (2) has a thermostat block (22).

4. Apparatus according to Claims 2 and 3, characterised in that the sample storage head (2) used for the means for the continuous and automatic sampling and storage of analytical samples has a restriction (8), and that the stated means has a pump (7).

5. Apparatus according to any of Claims 2 to 4, characterised in that the sampling head (4) used for the means for the evaluation of the analytical samples themselves consists of a heating block (10), a contact membrane (13) or a contact fabric (13) and a downstream analyser (14).

6. Apparatus according to Claim 4, characterised in that the restriction (8) consists of silicone rubber.

7. Process according to Claim 1, characterised in that the sample storage rate is controlled by the wall thickness and temperature of a silicone rubber functioning as a restriction and is optimised depending on the material.

8. Apparatus according to any of Claims 2 to 6 or for carrying out a process according to Claim 1 or 7, characterised in that the data trace (11) is part of a magnetisable layer (20).

9. Apparatus according to any of Claims 2 to 6 or for carrying out a process according to Claim 1 or 7, characterised in that the data trace (11) is part of an optically inscribable layer which may be, in particular, a flexible plastics film which is coated with dyes and/or polymers.

10. Process for the operation of an apparatus according to Claim 9, characterised in that the data trace (11) is inscribed by means of a printer, a chart recorder or a laser beam.

11. Apparatus according to Claim 8, characterised in that the magnetisable layer (20) is wholly or partly surrounded by a storage tape cassette (16), the outer material of which is such that it acts as a magnetic shield.

12. Apparatus according to Claim 11, characterised in that the outer material of the storage tape cassette (16) has one or more layers and contains soft iron and/or µ-metal.

## Revendications

1. Procédé de prélèvement non intrusif, continu et automatique, d'échantillons d'analyse avec un stockage des substances et des données provenant des échantillons d'analyse, procédé dans lequel, à l'aide d'une pompe (7), on produit un courant d'échantillon (6), on prélève à l'aide de ce courant d'échantillon (6) un échantillon et, au moyen d'une tête de stockage d'échantillon (2), on le place sur un corps de stockage (1) pouvant opérer une sorption, l'échantillon pénétrant par dissolution et diffusion dans la couche de sorption (12) du corps de stockage (1) et y formant une tache d'échantillon (9) ou une trace d'échantillon (9), les données corrélées étant enregistrées parallèlement au stockage d'échantillons sur le corps de stockage (1), dans une piste de données (11), à l'aide d'une tête d'écriture de données (3), en vue d'opérer une exploitation de l'échantillon, le corps de stockage (1) étant mis en contact, au moyen d'une membrane à contact (13) ou d'un tissu à contact (13), avec une tête de prélèvement d'échantillon (4), l'échantillon étant extrait, partiellement ou en totalité, de la tache d'échantillon (9) de la couche de sorption (12) du corps de stockage (1), par l'effet de la chaleur, l'échantillon étant amené, au moyen d'un courant de gaz porteur (15), à l'analyse (14), les données corrélées étant lues de la piste de données (11) au moyen d'une tête de lecture de données (5), la couche de sorption étant chauffée, au moyen de la tête de stockage d'échantillons (2), à une température appropriée au stockage, en vue de mettre à disposition sur une longue durée les échantillons et les données, pour opérer une éventuelle exploitation suivant des critères susceptibles d'être fixés ultérieurement.

2. Dispositif pour mettre en oeuvre le procédé selon la revendication 1,
- avec un dispositif continu et automatique de prélèvement et de stockage des échantillons d'analyse et d'enregistrement des données corrélées, composé d'un corps de stockage (1), susceptible d'opérer une sorption et susceptible d'être l'objet d'une écriture soit magnétique, soit optique, d'une tête de stockage d'échantillon (2) et d'une tête d'écriture de données (3); et
- avec un dispositif destiné à exploiter soit des substances, soit des données des échantillons d'analyse, composé d'un corps de stockage (1) avec les échantillons et données, d'une tête de prélèvement d'échantillon (4) et d'une tête de lecture de données (5), la tête de stockage d'échantillons (2) comportant un bloc de chauffage (10).

3. Dispositif selon la revendication 2, caractérisé en ce que la tête de stockage d'échantillons (2) comporte un bloc thermostatique (22).

4. Dispositif selon les revendications 2 et 3, caractérisé en ce que la tête de stockage d'échantillon (2), utilisée pour le dispositif continu et automatique de prélèvement d'échantillon et de stockage d'échantillons d'analyse présente une restriction (8) et en ce que ledit dispositif présente une pompe (7).

5. Dispositif selon les revendications 2 à 4, caractérisé en ce que la tête de prélèvement d'échantillon (4) utilisée pour le dispositif d'exploitation des substances des échantillons d'analyse est composée d'un bloc de chauffage (10), d'une membrane à contact (13) ou d'un tissu à contact (13) et d'un appareil d'analyse (14) monté en aval.

6. Dispositif selon la revendication 4, caractérisé en ce que la restriction (8) est composée en caoutchouc au silicone.

7. Procédé selon la revendication 1, caractérisé en ce que le taux de stockage d'échantillon est contrôlé et optimisé en fonction des substances, par l'épaisseur de paroi et la température d'un caoutchouc au silicone faisant fonction de restriction.

8. Dispositif selon les revendications 2 à 6 ou pour mettre en oeuvre un procédé selon la revendication 1 ou 7, caractérisé en ce que la piste de données (11) fait partie d'une couche magnétique (20).

9. Dispositif selon les revendications 2 à 6 ou pour mettre en oeuvre un procédé selon la revendication 1 ou 7, caractérisé en ce que la piste de données (11) fait partie d'une couche pouvant recevoir une écriture optique, pouvant en particulier être une feuille synthétique flexible, recouverte de colorants et/ou de polymères.

10. Procédé d'exploitation d'un dispositif selon la revendication 9, caractérisé en ce que la piste de données (11) est pourvue d'une écriture effectuée au moyen d'une imprimante, d'un organe d'écriture ou d'un rayon laser.

11. Dispositif selon la revendication 8, caractérisé en ce que la couche magnétisable (20) est entourée, totalement ou partiellement, d'une cassette à bande de stockage (16), dont le matériau d'enveloppe est réalisé de telle façon qu'il agit comme écran anti-magnétique.

12. Dispositif selon la revendication 11, caractérisé en ce que le matériau d'enveloppe de la cassette à bande de stockage (16) est à une ou plusieurs couches et contient du fer doux et/ou un métal magnétisable.
